# FASCICULE DE BREVET EUROPEEN

(11) **EP 2 674 869 B1**
(45) Date de publication et mention de la délivrance du brevet: **25.03.2020**
(21) Numéro de dépôt: 13172089.8
(22) Date de dépôt: 14.06.2013
(51) Int. Cl.: G06F 12/02, H04L 29/08, H04M 1/725, H04W 4/80

(54) **Radio-étiquette et procédé de stockage de données dans une radio-étiquette**
Funketikett und Datenspeicherungsverfahren in einem Funketikett
Radio frequency identification tag and method for storing data in a radio frequency identification tag

(30) Priorité: 14.06.2012 FR 1255584
(43) Date de publication de la demande: 18.12.2013
(73) Titulaire: Schneider Electric Industries SAS, 92500 Rueil-Malmaison (FR)
(72) Inventeur: Barraud, Jean-Luc, 16310 St-Adjutory (FR); Cutting-Decelle, Anne-Françoise, 1180 BRUXELLES (BE)
(74) Mandataire: Lavoix

(56) Documents cités:
- EP-A1- 2 073 125
- EP-A1- 2 211 527
- US-A1- 2008 209 155

## Description

La présente invention concerne une radio-étiquette comprenant un émetteur-récepteur radioélectrique, une mémoire apte à stocker des données, un processeur associé à la mémoire, et des moyens de communication avec un dispositif de lecture de la radio-étiquette.

La présente invention concerne également un ensemble comprenant une telle radio-étiquette et un dispositif de lecture de la radio-étiquette via une liaison radioélectrique de données.

La présente invention concerne également un système comprenant un tel ensemble et un serveur externe comprenant un fichier contenant au moins une information complémentaire relative aux données de la radio-étiquette.

La présente invention concerne également un procédé de stockage de données dans une telle radio-étiquette.

On connaît des radio-étiquettes du type précité. Ces radio-étiquettes sont aptes à stocker des données dans leur mémoire et à les communiquer à un dispositif de lecture via des moyens radioélectriques de communication.

Le stockage de données se fait généralement en plaçant les données les unes à la suite des autres.

EP 2 073 125 A1 et EP 2 211 527 A1 décrivent chacun une radio-étiquette selon le préambule de la revendication 1. US2008/0209155 A1 décrit un circuit intégré de type étiquette RFID comprenant une unité de traitement couplée à une mémoire.

Toutefois, toute modification du nombre ou de la taille des données est fastidieuse car elle implique la réécriture d'au moins une partie des données dans la mémoire. En outre, du fait de la spécificité de chaque radio-étiquette, il n'y a pas d'interopérabilité possible entre une radio-étiquette et plusieurs dispositifs de lecture, les données de chaque type de radio-étiquette ne pouvant être interprétées que par le dispositif de lecture associé à ce type de radio-étiquette.

Le but de l'invention est donc de proposer une radio-étiquette comprenant une mémoire structurée permettant une modification facile et rapide des données contenues dans cette mémoire, tout en offrant une interopérabilité entre la radio-étiquette et plusieurs types de dispositifs de lecture.

A cet effet, l'invention a pour objet une radio-étiquette selon la revendication 1.

Selon d'autres aspects avantageux de l'invention, la radio-étiquette est selon l'une quelconque des revendications 2 à 5.

L'invention a également pour objet un ensemble selon la revendication 6.

L'invention a également pour objet un système selon la revendication 7.

L'invention a également pour objet un procédé de stockage de données selon la revendication 8.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique d'un système selon l'invention comprenant une radio-étiquette, un dispositif de lecture associé, ainsi qu'un serveur externe de données, le dispositif de lecture étant apte à communiquer avec le serveur externe,
- la figure 2 est un agrandissement de la mémoire de la radio-étiquette de la figure 1, et
- la figure 3 est un organigramme d'un procédé de stockage de données dans une radio-étiquette conforme à l'invention.

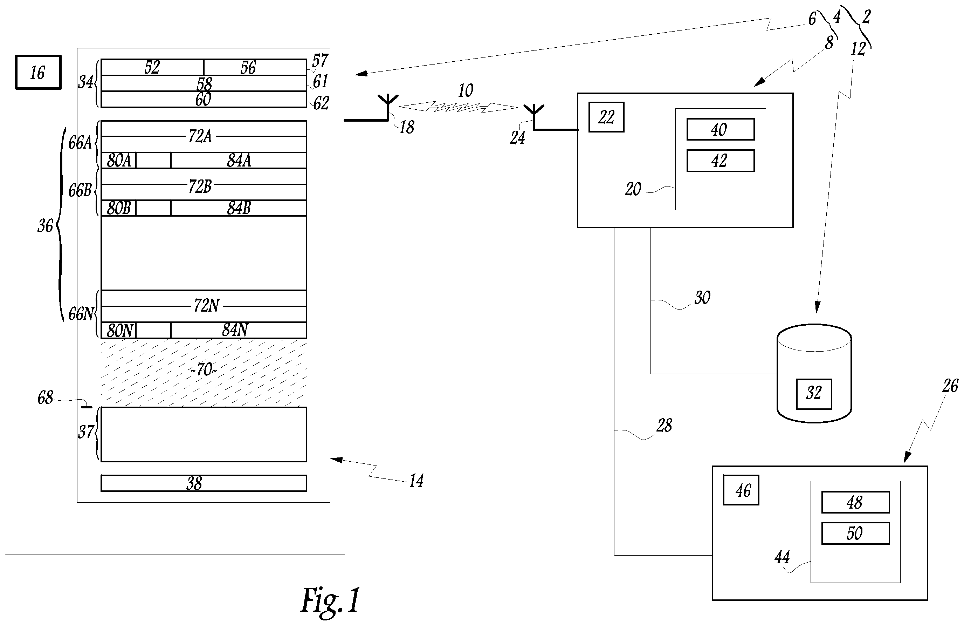

Sur la figure 1, un système 2 comprend un ensemble 4 comportant une radio-étiquette 6 et un dispositif 8 de lecture de la radio-étiquette via une première liaison de données 10, ainsi qu'un serveur externe 12.

La radio-étiquette 6 comprend une mémoire 14, apte à stocker des données, les données étant regroupées sous forme d'au moins une variable A,..., N, un processeur 16 associé à la mémoire 14, ainsi qu'un émetteur-récepteur radioélectrique 18.

Le dispositif de lecture 8 comprend une mémoire 20, un processeur 22 associé à la mémoire 20, ainsi qu'un émetteur-récepteur radioélectrique 24. Dans le mode de réalisation représenté à la figure 1, un automate 26 est relié au dispositif de lecture via une deuxième liaison de données 28.

La première liaison de données 10 est une liaison radioélectrique de données, par exemple, conforme à la norme ISO/IEC 18000.

Le serveur externe 12 est relié au dispositif de lecture 8 via une troisième liaison 30 de données et comprend un fichier 32 contenant au moins une information complémentaire pour la ou chaque variable A,..., N associée aux données de la radio-étiquette 6.

La mémoire 14 comprend un en-tête 34, une table 36 d'allocation des variables A, ..., N, une zone 37 de stockage des données associées auxdites variables, et un premier logiciel de communication 38.

La mémoire 20 du dispositif de lecture 8 comprend un deuxième logiciel de communication 40 et un logiciel 42 d'acquisition des données de la radio-étiquette 6.

L'automate 26 comprend une mémoire 44 et un processeur 46 associé à cette mémoire 44. Cette mémoire 44 comprend un troisième logiciel de communication 48, ainsi qu'un logiciel 50 de traitement des données lues par le dispositif de lecture 8.

La deuxième liaison de données 28 est une liaison filaire En variante, la deuxième liaison de données 28 est une liaison radioélectrique.

La troisième liaison de données 30 est également une liaison filaire. En variante, la troisième liaison de données 30 est une liaison radioélectrique.

Le fichier 32 est propre à stocker des informations complémentaires permettant d'interpréter plus précisément les données contenues dans la zone 37 de stockage. Ces informations complémentaires comprennent, par exemple, des commentaires sur les variables A, ..., N ou des définitions de groupes de variables.

Le fichier 32 est, par exemple, de type XML. En variante, le fichier 32 est un fichier de type base de données.

L'en-tête 34 comprend un premier indicateur 52 de l'utilisation d'une table 36 d'allocation des variables et un deuxième indicateur 56 du type de radio-étiquette 6 utilisée. Le premier indicateur 52 et le deuxième indicateur 56 sont, par exemple, contenus dans un mot de 16 bits, stocké à une première adresse 57.

L'en-tête 34 comprend également un troisième indicateur 58 contenant le nombre de variables stockées dans la radio-étiquette 6 et un quatrième indicateur 60 d'identification du fichier 32. Le troisième indicateur 58 et le quatrième indicateur 60 sont, par exemple, chacun contenus dans un mot de 16 bits, stocké à une deuxième adresse 61, et respectivement une troisième adresse 62. Le quatrième indicateur 60 permet ainsi d'identifier le fichier 32 stocké dans le serveur 12 et d'accéder aux informations associées aux données de la radio-étiquette 6 que le fichier 32 contient.

La table d'allocation 36 comprend un champ 66A, ..., 66N pour chaque variable A, ..., N.

La zone de stockage 37 est propre à stocker les données associées aux variables A, ..., N, c'est-à-dire les données utiles de la radio-étiquette. La zone de stockage 37 est agencée après la table d'allocation 36 dans la mémoire 14.

La zone de stockage 37 débute, par exemple, à une adresse fixe 68 de la mémoire 14. En fonction de la valeur de l'adresse fixe 68 et du nombre de variables A, ..., N, la mémoire 14 comprend une zone vacante 70 localisée entre la fin de la table d'allocation 36 et le début de la zone de stockage 37. Ainsi, l'ajout d'une variable N+1 consiste simplement à écrire un nouveau champ 66P à la suite du champ 66N de la table d'allocation de variables 36, puis à stocker la ou les données relatives à cette nouvelle variable P. Cette zone mémoire 70 laissée vacante permet un ajout aisé de variables dans la mémoire 14 de la radio-étiquette 6.

En variante, dans le cas où l'on veut optimiser la taille de la mémoire 14 et où l'on prévoit qu'aucune variable ne sera ajoutée, aucune zone mémoire n'est laissée entre la fin de la table d'allocation 36 et le début de la zone de stockage 37.

Chaque champ 66A, ..., 66N de la table d'allocation 36 comprend un premier code 72A, ..., 72N d'identification de la variable A, ...N correspondante. Le premier code 72A, ..., 72N comprend au moins un caractère alphanumérique. Dans l'exemple de réalisation de la figure 1, le premier code 72A, ..., 72N est constitué de quatre caractères alphanumériques, par exemple contenus dans deux mots de 16 bits stockés à des adresses successives.

Chaque champ 66A, ..., 66N comprend un deuxième code 80A, ..., 80N contenant le type de données associé à chaque variable A, ..., N. Ce deuxième code 80A, ..., 80N est contenu dans un mot de 16 bits, par exemple stocké à la suite des deux mots de 16 bits correspondant au premier code 72A, ..., 72N.

Chaque champ 66A, ..., 66N comprend un troisième code 84A, ..., 84N contenant la taille des données associé à chaque variable associée A, ..., N. Ce troisième code 84A, ..., 84N est stocké à la suite du mot de 16 bits correspondant au deuxième code 80A, ..., 80N.

En variante ou en complément, chaque champ 66A, ..., 66N de la table d'allocation 36 comprend un ou plusieurs autre(s) code(s) propre(s) à contenir d'autres informations liées aux variables A, ..., N stockées.

Dans ce qui suit, on décrit le procédé de stockage de données d'une radio-étiquette 6 conforme à l'invention.

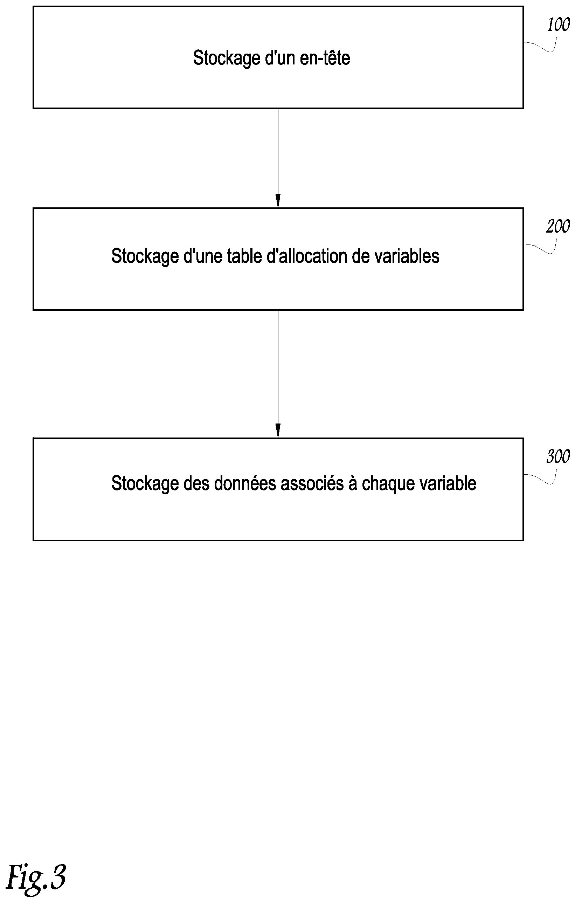

Ce procédé de stockage est représenté à l'aide des trois étapes de l'organigramme visible à la figure 3.

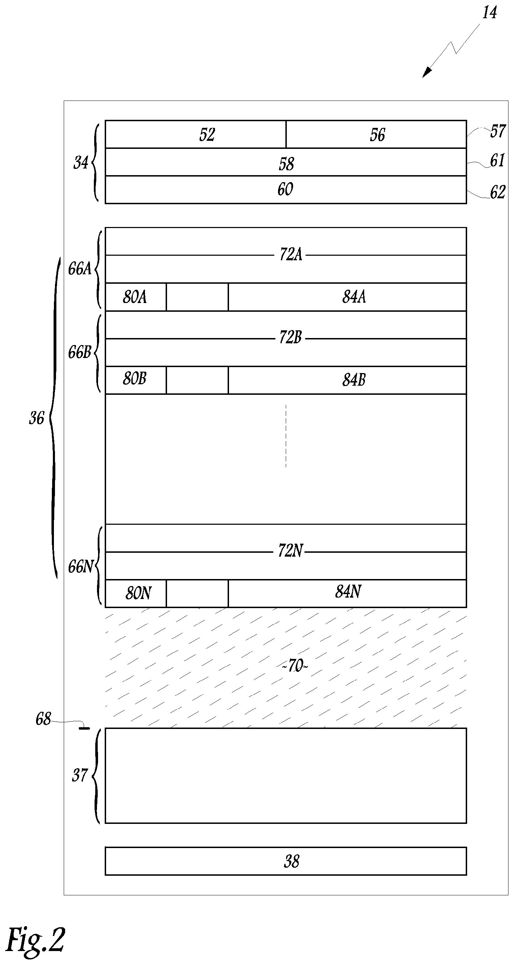

Dans une première étape 100, on réalise le stockage de l'en-tête 34 dans la mémoire 14 de la radio-étiquette 6. Le stockage de l'en-tête 34 comprend le stockage du premier indicateur 52 de l'utilisation de la table d'allocation 36, ainsi que le stockage du deuxième indicateur 56 du type de radio-étiquette 6. Dans l'exemple de réalisation des figures 1 et 2, la mémoire 14 est adressée par mots de 16 bits. Le premier indicateur 52 est stocké sur les 8 bits de poids fort de la première adresse 57 et le deuxième indicateur 56 est stocké sur les 8 bits de poids faible de cette même adresse 57. Dans un mode de réalisation, on attribue la valeur 246 à ce premier indicateur 52 car cette valeur ne définit pas un caractère imprimable en code ASCII, et une radio-étiquette n'utilisant pas de table d'allocation a donc peu de chance de commencer par cette valeur.

A la suite de cette étape, le troisième indicateur 58 du nombre de variables A, .., N est stocké dans l'en-tête 34, à la deuxième adresse 61.

Enfin, le quatrième indicateur 60 d'identification du fichier 32 est stocké à la troisième et dernière adresse 62 de l'en-tête 34. Ce quatrième indicateur 60 est en pratique un nom de fichier permettant au dispositif de lecture 8 d'accéder au fichier 32 contenu dans le serveur externe 12 via la troisième liaison de données 30.

Lors d'une deuxième étape 200, on réalise le stockage de la table d'allocation 36 des variables A, ..., N. Cette étape 200 consiste à stocker le champ 66A associé à la première variable A, c'est-à-dire le premier code 72A, le deuxième code 80A et le troisième code 84A associés à la première variable A, à partir de l'adresse de début de la table d'allocation 36, puis à réitérer cette opération pour chacune des autres variables B, ..., N.

Le stockage des premiers 72B, ......, 72N, deuxièmes 80A,....., 80N, et troisièmes 84B, .... 84N codes associés aux variables B à N s'effectue de manière analogue au stockage des trois codes 72A, 80A, 84A associés à la variable A. Ainsi le stockage des champs 66B, .... 66N relatifs aux variables B à N est analogue au stockage du champ 66A relatif à la première variable A.

Une dernière étape 300 consiste à stocker les données associées à chaque variable A, ..., N dans la zone de stockage 37 prévue à cet effet.

Après le stockage des données dans la radio-étiquette 6, le dispositif de lecture 8 est apte à lire l'en-tête 34 de la radio-étiquette et à en déduire sa structure, afin de réaliser la lecture des données de la radio-étiquette 6.

En complément, lorsque le quatrième indicateur 60 est présent dans l'en-tête 34, le dispositif de lecture 8 est apte à accéder via la troisième liaison de données 30 à des renseignements complémentaires sur les données de la radio-étiquette contenues dans le fichier 32 du serveur externe 12. Le dispositif de lecture 8 est également apte, via la troisième liaison de données 28, à communiquer les données acquises à l'automate 26 pour un traitement des données plus approfondi.

La radio-étiquette 10 selon l'invention est ainsi structurée de sorte que la table d'allocation des variables 36 correspond à une zone de la mémoire 14 allouée de manière à contenir des informations sur les données de la zone de stockage 37. Ainsi le dispositif de lecture 8 accède aux données de la zone de stockage 37, et à des informations sur la signification de ces données. En outre, l'interrogation via la troisième liaison de données 30 du fichier 32 contenu dans le serveur externe 12 par le dispositif de lecture 8, permet d'avoir des informations supplémentaires sur la nature des données stockées dans la zone de stockage 37.

Le deuxième indicateur 56 de l'en-tête 34 permet d'identifier le type de radio-étiquette 6, caractérisé par la structure de sa mémoire 14. Le dispositif de lecture 8 adapte alors sa lecture en fonction du type de radio-étiquette 6 qu'il interroge, assurant ainsi une interopérabilité entre le dispositif de lecture 8 et différentes radio-étiquettes 6. La radio-étiquette 6 selon l'invention permet ainsi une interopérabilité entre le dispositif de lecture 8 et une série de radio-étiquettes 6. De plus, le dispositif de lecture 8 étant apte à être programmé pour la lecture de radio-étiquettes de structures différentes, une interopérabilité est également assurée entre une même radio-étiquette 6 et plusieurs types de dispositifs de lecture 8.

En outre, le stockage des données dans la zone de stockage 37 se faisant à une adresse fixe, la zone vacante 70 laissée inutilisée permet d'ajouter facilement d'autres variables que celles déjà répertoriées dans la table d'allocation 36 enregistrée, afin de stocker ensuite, dans la zone de stockage 37, des données correspondant à ces autres variables. Ceci permet une modification ou une écriture simplifiée et rapide pour la modification des données contenues dans la radio-étiquette 6.

On conçoit ainsi que la radio-étiquette 6 selon l'invention permet une modification plus simple et plus rapide de sa mémoire 14, une interopérabilité entre le dispositif de lecture 8 et plusieurs types de radio-étiquettes 6, une interopérabilité entre la radio-étiquette 6 et plusieurs types de dispositifs de lecture 8, ainsi que l'accès à la signification des données de la radio-étiquette 6 à l'aide de la table d'allocation 36 ou, plus en détail, en interrogeant le fichier 32 contenu dans le serveur externe 12.

## Revendications

1. Radio-étiquette (6) comprenant un émetteur-récepteur (18) radioélectrique, une mémoire (14) apte à stocker des données, un processeur (16) associé à la mémoire (14), et des moyens de communication (18, 38) avec un dispositif de lecture (8) de la radio-étiquette (6), adapté en ce que les données sont aptes à être regroupées sous forme d'au moins une variable, et **caractérisé en ce que** la mémoire (14) comprend un en-tête (34) et une table (36) d'allocation de variable(s), la table d'allocation (36) comportant, pour la ou chaque variable, une zone (37) de stockage d'au moins une information d'identification associée à la variable correspondante, l'en-tête (34) comprenant un premier indicateur (52) de l'utilisation de la table (36) d'allocation de variables, un deuxième indicateur (56) du type de radio-étiquette (6) utilisée, un troisième indicateur (58) contenant le nombre de variables stockées dans la radio-étiquette (6) et un quatrième indicateur (60) d'identification d'un fichier (32) contenant au moins une information complémentaire pour la ou chaque variable associée aux données de la radio-étiquette (6), le fichier (32) étant destiné à être stocké dans un serveur externe (12).

2. Radio-étiquette (6) selon la revendication 1, **caractérisée en ce que** l'information d'identification comprend un premier code (72A, ..., 72N) d'identification de la variable, le premier code comportant au moins un caractère alphanumérique.

3. Radio-étiquette (6) selon la revendication 1 ou 2, **caractérisée en ce que** l'information d'identification comprend un deuxième code (80A, ..., 80N) contenant le type de données associées à la variable.

4. Radio-étiquette (6) selon l'une quelconque des revendications précédentes, **caractérisée en ce que** l'information d'identification comprend un troisième code (84A, ..., 84N) contenant la taille en octets des données associées à la variable.

5. Radio-étiquette (6) selon l'une des revendications précédentes, **caractérisée en ce que** les données associées aux variables sont stockées dans la mémoire (14) à partir d'une adresse fixe (68) prédéterminée.

6. Ensemble (4) comprenant une radio-étiquette (6) et un dispositif de lecture (8) de la radio-étiquette (6), la radio-étiquette (6) et le dispositif de lecture (8) étant reliés par une liaison radioélectrique (10) de données, **caractérisé en ce que** la radio-étiquette (6) est conforme à l'une quelconque des revendications précédentes, et **en ce que** le dispositif de lecture (8) est apte à lire des données contenues dans la mémoire (14) de la radio-étiquette (6).

7. Système (2) comprenant un serveur externe (12) et un ensemble (4) comportant une radio-étiquette (6) et un dispositif de lecture (8) de la radio-étiquette (6), le serveur externe (12) comprenant un fichier (32) contenant au moins une information complémentaire pour la ou chaque variable associée aux données de la radio-étiquette (6), **caractérisé en ce que** l'ensemble (4) est conforme à la revendication 6, et **en ce que** le dispositif de lecture (8) est apte à communiquer avec le serveur externe (12) pour accéder audit fichier (32).

8. Procédé de stockage de données dans une radio-étiquette (6) comprenant un émetteur-récepteur (18) radioélectrique, une mémoire (14) apte à stocker des données, un processeur (16) associé à la mémoire (14), et des moyens de communication (18, 38) avec un dispositif de lecture (8) de la radio-étiquette (6), le procédé de stockage étant **caractérisé en ce qu'**il comprend les étapes (100, 200, 300) suivantes :
- le stockage dans la mémoire (14) d'un en-tête (34) et d'une table (36) d'allocation de variable(s), la table d'allocation (36) comportant, pour la ou chaque variable, une zone (37) de stockage d'au moins une information d'identification associée à la variable correspondante, l'en-tête (34) comprenant un premier indicateur (52) de l'utilisation de la table (36) d'allocation de variables, un deuxième indicateur (56) du type de radio-étiquette (6) utilisée, un troisième indicateur (58) contenant le nombre de variables stockées dans la radio-étiquette (6) et un quatrième indicateur (60) d'identification d'un fichier (32) contenant au moins une information complémentaire pour la ou chaque variable associée aux données de la radio-étiquette (6), le fichier (32) étant destiné à être stocké dans un serveur externe (12), et
- le stockage des données dans la mémoire (14), les données étant regroupées sous forme d'au moins une variable.

## Patentansprüche

1. Funketikett (6), umfassend einen funkelektrischen Sendeempfänger (18), einen Speicher (14), der imstande ist, Daten zu speichern, einen mit dem Speicher (14) verknüpften Prozessor (16) und Kommunikationsmittel (18, 38) mit einer Vorrichtung zum Lesen (8) des Funketiketts (6), dafür eingerichtet, dass die Daten in Form von wenigstens einer Variablen gruppiert werden können und **dadurch gekennzeichnet, dass** der Speicher (14) einen Kopf (34) und eine Tabelle (36) zur Zuordnung von (einer) Variablen umfasst, wobei die Zuordnungstabelle (36) für die oder jede Variable einen Bereich (37) zur Speicherung von wenigstens einer Identifikationsinformation beinhaltet, die mit der entsprechenden Variablen verknüpft ist, wobei der Kopf (34) Folgendes umfasst: einen ersten Indikator (52) der Verwendung der Tabelle (36) zur Zuordnung von Variablen, einen zweiten Indikator (56) des Typs des verwendeten Funketiketts (6), einen dritten Indikator (58), der die Anzahl der Variablen enthält, die in dem Funketikett (6) gespeichert sind, und einen vierten Indikator (60) zur Identifikation einer Datei (32), die wenigstens eine zusätzliche Information für die oder jede mit den Daten des Funketiketts (6) verknüpfte Variable enthält, wobei die Datei (32) dazu bestimmt ist, in einem externen Server (12) gespeichert zu werden.

2. Funketikett (6) nach Anspruch 1, **dadurch gekennzeichnet, dass** die Identifikationsinformation einen ersten Code (72A, ..., 72N) zur Identifikation der Variablen umfasst, wobei der erste Code wenigstens ein alphanumerisches Zeichen beinhaltet.

3. Funketikett (6) nach Anspruch 1 oder 2, **dadurch gekennzeichnet, dass** die Identifikationsinformation einen zweiten Code (80A, ..., 80N) umfasst, der den Typ der mit der Variablen verknüpften Daten enthält.

4. Funketikett (6) nach einem der vorhergehenden Ansprüche, **dadurch gekennzeichnet, dass** die Identifikationsinformation einen dritten Code (84A, ..., 84N) umfasst, der die Größe der mit der Variablen verknüpften Daten in Bytes enthält.

5. Funketikett (6) nach einem der vorhergehenden Ansprüche, **dadurch gekennzeichnet, dass** die mit den Variablen verknüpften Daten in dem Speicher (14) ausgehend von einer vorbestimmten fixen Adresse (68) gespeichert sind.

6. Einheit (4), umfassend ein Funketikett (6) und eine Vorrichtung zum Lesen (8) des Funketiketts (6), wobei das Funketikett (6) und die Lesevorrichtung (8) durch eine funkelektrische Datenverbindung (10) miteinander verbunden sind, **dadurch gekennzeichnet, dass** das Funketikett (6) in Übereinstimmung mit einem der vorhergehenden Ansprüche ist und dass die Lesevorrichtung (8) imstande ist, die in dem Speicher (14) des Funketiketts (6) enthaltenen Daten zu lesen.

7. System (2), umfassend einen externen Server (12) und eine Einheit (4), die ein Funketikett (6) und eine Vorrichtung zum Lesen (8) des Funketiketts (6) beinhaltet, wobei der externe Server (12) eine Datei (32) umfasst, die wenigstens eine zusätzliche Information für die oder jede mit den Daten des Funketiketts (6) verknüpfte Variable enthält, **dadurch gekennzeichnet, dass** die Einheit (4) in Übereinstimmung mit Anspruch 6 ist und dass die Lesevorrichtung (8) imstande ist, mit dem externen Server (12) zu kommunizieren, um auf die Datei (32) zuzugreifen.

8. Verfahren zum Speichern von Daten in einem Funketikett (6), umfassend einen funkelektrischen Sendeempfänger (18), einen Speicher (14), der imstande ist, Daten zu speichern, einen mit dem Speicher (14) verknüpften Prozessor (16) und Kommunikationsmittel (18, 38) mit einer Vorrichtung zum Lesen (8) des Funketiketts (6), wobei das Speicherungsverfahren **dadurch gekennzeichnet ist, dass** es die folgenden Schritte (100, 200, 300) umfasst:
- Speichern eines Kopfs (34) und einer Tabelle (36) zur Zuordnung von (einer) Variablen im Speicher (14), wobei die Zuordnungstabelle (36) für die oder jede Variable einen Bereich (37) zur Speicherung von wenigstens einer Identifikationsinformation beinhaltet, die mit der entsprechenden Variablen verknüpft ist, wobei der Kopf (34) Folgendes umfasst: einen ersten Indikator (52) der Verwendung der Tabelle (36) zur Zuordnung von Variablen, einen zweiten Indikator (56) des Typs des verwendeten Funketiketts (6), einen dritten Indikator (58), der die Anzahl der Variablen enthält, die in dem Funketikett (6) gespeichert sind, und einen vierten Indikator (60) zur Identifikation einer Datei (32), die wenigstens eine zusätzliche Information für die oder jede mit den Daten des Funketiketts (6) verknüpfte Variable enthält, wobei die Datei (32) dazu bestimmt ist, in einem externen Server (12) gespeichert zu werden, und
- Speichern der Daten in dem Speicher (14), wobei die Daten in Form von wenigstens einer Variablen gruppiert sind.

## Claims

1. Radio frequency identification tag (6) comprising a radioelectric transmitter-receiver (18), a memory (14) capable of storing data, a processor (16) associated with the memory (14), and communication means (18, 38) for communicating with a reading device (8) for reading the radio-frequency identification tag (6), adapted in that the data are capable of being grouped in the form of at least one variable, and **characterised in that** the memory (14) comprises a header (34) and a variable allocation table (36), the allocation table (36) having, for the or each variable, a zone (37) for storing at least one piece of identification information associated with the corresponding variable, the header (34) comprising a first indicator (52) of the use of the variable allocation table (36), a second indicator (56) of the type of radio frequency identification tag (6) used, a third indicator (58) containing the number of variables stored in the radio frequency identification tag (6) and a fourth indicator (60) for identification of a file (32) containing at least one additional piece of information for the or each variable associated with the data of the radio frequency identification tag (6), the file (32) being intended to be stored on an external server (12).

2. Radio frequency identification tag (6) according to claim 1, **characterised in that** the identification information comprises a first code (72A, ..., 72N) for identifying the variable, the first code including at least one alphanumerical character.

3. Radio frequency identification tag (6) according to claim 1 or 2, **characterised in that** the identification information comprises a second code (80A, ..., 80N) containing the type of data associated with the variable.

4. Radio frequency identification tag (6) according to any one of the preceding claims, **characterised in that** the identification information comprises a third code (84A, ..., 84N) containing the size in octets of the data associated with the variable.

5. Radio frequency identification tag (6) according to any one of the preceding claims, **characterised in that** the data associated with the variables are stored in the memory (14) on the basis of a predetermined fixed address (68).

6. Assembly (4) comprising a radio frequency identification tag (6) and a reading device (8) for reading the radio frequency identification tag (6), the radio frequency identification tag (6) and the reading device (8) being connected by a radioelectric data link (10), **characterised in that** the radio frequency identification tag (6) is in accordance with any one of the preceding claims, and **in that** the reading device (8) is capable of reading data contained in the memory (14) of the radio frequency identification tag (6).

7. System (2) comprising an external server (12) and an assembly (4) comprising a radio frequency identification tag (6) and a reading device (8) for reading the radio frequency identification tag (6), the external server (12) comprising a file (32) containing at least one additional piece of information for the or each variable associated with the data of the radio frequency identification tag (6), **characterised in that** the assembly (4) is in accordance with claim 6, and **in that** the reading device (8) is capable of communicating with the external server (12) in order to access said file (32).

8. Method for storing data in a radio frequency identification tag (6) comprising a radioelectric transmitter-receiver (18), a memory (14) capable of storing data, a processor (16) associated with the memory (14), and communication means (18, 38) for communicating with a reading device (8) for reading the radio frequency identification tag (6), the storage method being **characterised in that** it comprises the following steps (100, 200, 300):
- storing in the memory (14) a header (34) and a variable allocation table (36), the allocation table (36) having, for the or each variable, a zone (37) for storing at least one piece of identification information associated with the corresponding variable, the header (34) comprising a first indicator (52) of the use of the variable allocation table (36), a second indicator (56) of the type of radio frequency identification tag (6) used, a third indicator (58) containing the number of variables stored in the radio frequency identification tag (6) and a fourth indicator (60) for identification of a file (32) containing at least one additional piece of information for the or each variable associated with the data of the radio frequency identification tag (6), the file (32) being intended to be stored on an external server (12), and
- storing data in the memory (14), the data being grouped in the form of at least one variable.
